Europäisches Patentamt

**European Patent Office**

**Office européen des brevets**

(19)

(11) **EP 0 782 809 B1**

(12) **EUROPÄISCHE PATENTSCHRIFT**

(45) Veröffentlichungstag und Bekanntmachung des Hinweises auf die Patenterteilung:
**28.02.2001 Patentblatt 2001/09**

(51) Int Cl.[7]: **H04Q 3/52**, G02F 1/313

(21) Anmeldenummer: **95931131.7**

(86) Internationale Anmeldenummer:
**PCT/DE95/01254**

(22) Anmeldetag: **13.09.1995**

(87) Internationale Veröffentlichungsnummer:
**WO 96/08932 (21.03.1996 Gazette 1996/13)**

(54) **OPTISCHE 1XN- UND NXN-SCHALTMATRIX IN BAUMSTRUKTUR**

TREE-STRUCTURED OPTICAL 1XN AND NXN SWITCH MATRICES

MATRICE DE COMMUTATION OPTIQUE 1XN ET NXN ARBORESCENTE

(84) Benannte Vertragsstaaten:
**AT BE CH DE FR GB IT LI NL SE**

(30) Priorität: **14.09.1994 DE 4432728**

(43) Veröffentlichungstag der Anmeldung:
**09.07.1997 Patentblatt 1997/28**

(73) Patentinhaber: **SIEMENS AKTIENGESELLSCHAFT**
**80333 München (DE)**

(72) Erfinder:
• **STOLL, Lothar**
  **D-81369 München (DE)**
• **SCHIENLE, Meinrad**
  **D-81375 München (DE)**
• **MÜLLER, Gustav**
  **D-80993 München (DE)**

(56) Entgegenhaltungen:
EP-A- 0 353 871          EP-A- 0 390 002
US-A- 4 934 775          US-A- 4 998 791

• ELECTRONICS LETTERS, Bd. 26, Nr. 1, 4.Januar 1990 Seite 4/5 XP 000105628 GRANESTRAND P ET AL 'INTEGRATED OPTICS 4 X 4 SWITCH MATRIX WITH DIGITAL OPTICAL SWITCHES'
• PROCEEDINGS OF THE EUROPEAN CONFERENCE ON OPTICAL COMMUNICATION (EC, MONTREUX, SEPT. 12 - 16, 1993 REGULAR PAPERS, Bd. 2, 12.September 1993 SWISS ELECTROTECHNICAL ASSOCIATION, Seiten 17-20, XP 000492166 NAGASE R ET AL 'SILICA-BASED 8X8 OPTICAL-MATRIX SWITCH MODULE WITH HYBRID INTEGRATED DRIVING CIRCUITS' in der Anmeldung erwähnt
• ELECTRONICS LETTERS, Bd. 23, Nr. 8, 9.April 1987 STEVENAGE, HERTS.,GB, Seiten 376-377, K,HABARA ET AL 'Geometrical design considerations for a tree-structured optical switch matrix'
• JOURNAL OF LIGHTWAVE TECHNOLOGY, Bd. 7, Nr. 7, Juli 1989 Seiten 1023-1028, XP 000053505 OKAYAMA H ET AL 'OPTICAL SWITCH MATRIX WITH SIMPLIFIED N X N TREE STRUCTURE'

**Beschreibung**

Die Erfindung betrifft eine optische 1×N-Schaltmatrix in Baumstruktur nach dem Oberbegriff des Patentanspruchs 1 und eine optische N×N-Schaltmatrix nach dem Oberbegriff des Patentanspruchs 3.

Eine optische 1×N-Schaltmatrix nach dem Oberbegriff des Anspruchs 1 ist aus EP 0 353 871 A1 bekannt. Bei dieser Schaltmatrix ist zumindest einem Ausgang/Eingang ein optischer Torschalter zum wahlweisen optischen Freigeben und Blockieren dieses Ausgangs/Eingangs in Abhängigkeit von Schaltzuständen von Umschaltern zumindest zweier Verzweigungspunkte zugeordnet ist, wobei von einem dieser Umschalter ein abzweigender Wellenleiter mit diesem Ausgang/Eingang verbunden ist.

Diese bekannte Schaltmatrix weist eine erhöhte Nebensprechunterdrückung auf.

Eine optische N×N-Schaltmatrix nach dem Oberbegriff des Patentanspruchs 3 geht aus US-A-4 934 775 hervor.

Optische Schaltmatrizen sind Schlüsselkomponenten zukünftiger optischer Nachrichtennetze. Sie ermöglichen das flexible Umlenken des optischen Datenstroms zwischen verschiedenen optischen Glasfasern oder anderen optischen Wellenleitern ohne Einschränkung der Datenrate.

Auf einem Substrat integrierte Festkörper-Schaltmatrizen sind besonders kompakt und versprechen Kostenvorteile gegenüber heute verfügbaren elektromechanischen Komponenten (Anbieter z.B. JDS FITEL, ASTARTE, OptiVideo, BT&D). Derartige Festkörper-Schaltmatrizen sind auf Substraten aus beispielsweise $LiNbO_3$ (siehe P.J. Duthie, M.J. Wale "16×16 single chip optical switch array in Lithium Niobate", Electron. Lett., Vol. 27, S. 1265-1266, 1991), Silizium (siehe R. Nagase, A. Himeno, K.Kato, O. Okuno "Silica-ased 8×8 optical-matrix-switch module with hybrid integrated driving circuits", ECOC '93, Montreux, Paper MoP1.2, S. 17-20) oder III-V-Halbleitern (siehe K. Komatsu, K. Hamamoto, M. Sugimoto, A. Ajisawy, Y. Kohga, A. Suzuki "4×4GaAS/AlGaAs optical matrix switches with uniform device characteristics using alternating $\Delta\beta$ electrooptic wave directional couplers", J. Ligthwave Technol., Vol. LT-9, S. 871-878, 1991 und L. Stoll, G. Müller, M. Honsberg, M. Schienle, S. Eichinger, U. Wolff "4×4 optical switch matrix on InP with low switching current", AEÜ, Vol. 46, S. 116-118) realisiert worden.

Aufgabe der Erfindung ist es, eine optische 1×N-Schaltmatrix mit erhöhter Nebensprechunterdrückung der eingangs genannten Art bereitzustellen, die sich baulich einfacher realisieren läßt.

Diese Aufgabe wird durch eine optische 1×N-Schaltmatrix gelöst, welche die im Anspruch 1 angegebenen Merkmale aufweist.

Durch diese Lösung kann vorteilhafterweise auch eine baulich einfache optische N×N-Schaltmatrix mit erhöhter Nebensprechunterdrückung realisiert werden, welche die im Patentanspruch 3 angegebenen Merkmale aufweist.

Eine erfindungsgemäße optische 1×N-Schaltmatrix und N×N-Schaltmatrix kann vorteilhafterweise als eine auf einem Substrat integrierte und besonders kompakte Festkörper-Schaltmatrix realisiert und überdies so ausgeführt werden daß eine Ansteuerung der Matrix von außen zu einer Erhöhung der Nebensprechunterdrückung der Matrix nicht notwendig ist.

Bevorzugte und vorteilhafte Ausgestaltungen der erfindungsgemäßen Schaltmatrizen gehen aus den Unteransprüchen 3 bis 15 hervor.

Die erfindungsgemäßen optischen NxN-Schaltmatrizen sind wegen ihrer hohen Nebensprechunterdrückung besonders vorteilhaft in optischen Netzen, insbesondere öffentlichen optischen Netzen, z.B. Telekom-Netzen, einsetzbar, bei denen eine hohe Nebensprechunterdrückung für die Funktion wesentlich ist.

Die Erfindung wird in der nachfolgenden Beschreibung anhand der Figuren beispielhaft näher erläutert. Es zeigen:

Figur 1 — in schematischer Darstellung eine Draufsicht auf eine erfindungsgemäße 1×N-Schaltmatrix,

Figuren 2a bis 2f — in schematischer Darstellung in Draufsicht verschiedene Realisierungen der in dem Ausschnitt A in Figur 1 enthaltenen Umund Torschalter in detaillierterer Darstellung,

Figur 3 — in schematischer Darstellung eine Draufsicht auf eine mit erfindungsgemäßen 1×N-Schaltmatrizen realisierte erfindungsgemäße N×N-Schaltmatrix, und

Figur 4 — in schematischer Darstellung eine Draufsicht auf eine herkömmliche 1×N-Schaltmatrix, die Grundlage der erfindungsgemäßen Schaltmatrix nach Figur 1 ist.

Die Figuren sind nicht maßstäblich.

Die erfindungsgemäße optische 1×N-Schaltmatrix weist einen Eingang $1_0$ und $N = 2^n$, $n = 1, 2, 3$ ... Ausgänge $1_1$ sowie eine generell mit 1 bezeichnete und aus einer Anzahl $2^0 + 2^1 + ... + 2^n$ sich in N - 1 Verzweigungspunkten 3 baumartig verzweigenden optischen Wellenleitern 11 bestehende Wellenleiterstruktur auf, die den Eingang $1_0$ mit jedem der Ausgänge $1_1$ verbindet.

Die Zahl n, die, wie angedeutet, eine beliebige ganze Zahl $\geq$ 1 ist gibt die Anzahl der vom Eingang $1_0$ in der Richtung 9 zu den Ausgängen $1_1$ aufeinanderfolgenden Verzweigungsstufen $2_j$ mit j = 1 bis n an. Beim dargestellten Ausführungsbeispiel ist speziell n = 3, d. h. N = $2^3$ = 8 gewählt, so daß die Anzahl der Verzweigungspunkte 3 gleich 7 und die Anzahl der baumartig sich verzweigenden Wellenleiter 11 gleich 15 ist.

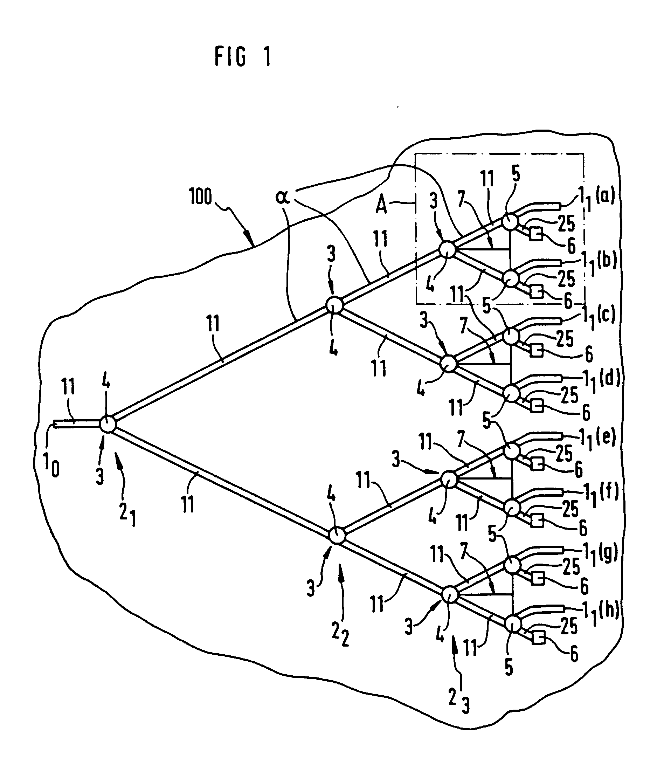

Nach Figur 1 führt vom Eingang $1_0$ ein Wellenleiter 10 zu einem die erste Verzweigungsstufe $2_1$ bildenden Verzweigungspunkt 3. Von diesem Verzweigungspunkt 3 zweigen zwei Wellenleiter 11 ab, die zu je einem der beiden Verzweigungspunkte 3 der zweiten Verzweigungsstufe $2_2$ führen.

Von jedem der beiden Verzweigungspunkte 3 der zweiten Verzweigungsstufe $2_2$ zweigen je zwei, d. h. insgesamt vier Wellenleiter 11 ab, die zu je einem der insgesamt vier Verzweigungspunkte 3 der dritten und in diesem Beispiel letzten Verzweigungsstufe $2_3$ führen Verzweigungsstufe $2_3$.

Von jedem der vier Verzweigungspunkten 3 der dritten Verzweigungsstufe $2_3$ zweigen je zwei, d. h. insgesamt acht Wellenleiter 11 ab, die zu je einem der in diesem Beispiel insgesamt acht Ausgänge $1_1$ führen.

Pro Verzweigungspunkt 3 ist je ein optischer Schalter 4 zum wahlweisen Umschalten zwischen den von diesem Verzweigungspunkt 3 abzweigenden Wellenleitern 11 vorgesehen .

Umschalten zwischen den von einem Verzweigungspunkt 3 abzweigenden Wellenleitern 11 bedeutet, daß der Umschalter 4 dieses Verzweigungspunkts 3 in einem Schaltzustand den Lichtweg zu einem dieser abzweigenden Wellenleiter 11 freigibt und zum anderen Wellenleiter 11 blockiert und in einem anderen Schaltzustand den Lichtweg zum anderen abzweigenden Wellenleiter 11 freigibt und zum einen abzweigenden Wellenleiter 11 blockiert.

Beispielsweise gelangt im einen Schaltzustand des Umschalters 4 des Verzweigungspunktes 3 der ersten Verzweigungsstufe $2_1$ ein diesem Verzweigungspunkt 3 vom Eingang $1_0$ durch den Wellenleiter 10 zugeführtes Lichtsignal nur in einen, beispielsweise den oberen der beiden von diesem Verzweigungspunkt 3 abzweigenden Wellenleiter 11, nicht aber in den unteren abzweigenden Wellenleiter 11. Im oberen Wellenleiter 11 wird das Lichtsignal zu dem mit diesem Wellenleiter 11 verbundenen oberen Verzweigungspunkt 3 der zweiten Verzweigungsstufe $2_2$ weitergeführt, nicht aber in den unteren Wellenleiter 11.

Im anderen Schaltzustand des Umschalters 4 dieses Verzweigungspunktes 3 gelangt das Lichtsignal nur in den unteren abzweigenden Wellenleiter 11, in dem es zum unteren Verzweigungspunkt 3 der zweiten Verzweigungsstufe $2_2$ weitergeführt wird, nicht aber in den oberen abzweigenden Wellenleiter 11.

Das für den Verzweigungspunkt 3 der ersten Verzweigungsstufe $2_2$ geschilderte gilt ebenso für jeden Verzweigungspunkt 3 aller anderen Verzweigungsstufen $2_2$, $2_3$ usw..

In der Praxis sind die Umschalter 4 nicht so ideal, daß kein Anteil des dem Verzweigungspunkt 3 dieses Umschalters 4 zugeführten Lichtsignals in den blockierten abzweigenden Wellenleiter 11 gelangt, sondern es gelangt auch in diesen blockierten abzweigenden Wellenleiter 11 ein geringer Anteil dieses Lichtsignals, der Nebensprechen verursacht.

Zur Unterdrückung des Nebenspracheffekts bezüglich eines Ausgangs $1_1$ der Schaltmatrix, zu dem momentan kein durchgehender Lichtweg führt, ist erfindungsgemäß diesem Ausgang $1_1$ ein optischer Torschalter 5 zum wahlweisen optischen Freigeben und Blockieren dieses Ausgangs $1_1$ in Abhängigkeit von einem Schaltzustand des Umschalters 4 eines Verzweigungspunktes 3, von dem ein abzweigender Wellenleiter 11 zu diesem Ausgang $1_1$ führt, zugeordnet.

Da jeder Ausgang $1_1$ der Schaltmatrix ein Ausgang sein kann, zu dem momentan kein durchgehender Lichtweg führt, ist es zweckmäßig, daß jedem Ausgang $1_1$ der Schaltmatrix je ein solcher Torschalter 5 zugeordnet ist, mit dem im Bedarfsfalle das Nebensprechen unterdrückt werden kann.

Die Schaltmatrix nach Figur 1 ist ein Beispiel für diesen Fall. Bei dieser Schaltmatrix zweigen von jedem Verzweigungspunkt 3 der letzten Verzweigungsstufe $2_3$ jeweils zwei Wellenleiter 11 ab, deren jeder zu je einem der Ausgänge $1_1$ führt.

In jedem dieser von den Verzweigungspunkten 3 der letzten verzweigungsstufe $2_3$ abzweigenden Wellenleiter 11 ist je ein Torschalter 5 angeordnet, der in einem Schaltzustand diesen Wellenleiter 11 freigibt oder blockiert, d.h. ein in diesem abzweigenden Wellenleiter 11 geführtes Lichtsignal zum Ausgang $1_1$, dem dieser Torschalter 5 zugeordnet ist, gelangen läßt oder nicht.

Ein Umschalter 4 eines Verzweigungspunktes 3 der letzten Verzweigungsstufe $2_3$, von dem ein abzweigender Wellenleiter 11 zu einem Ausgang $1_1$, dem ein Torschalter 5 zugeordnet ist, führt und dieser Torschalter 5 selbst bestehen vorteilhafterweise aus einem elektrisch steuerbaren optoelektronischen Schalter mit einer Steuerelektrodenanordnung 54, an die elektrische Steuersignale zum Schalten dieses Schalters 5 zwischen zumindest zwei Schaltzuständen, wobei im einen Schaltzustand der Torschalter 5 den Ausgang $1_1$, dem er zugeordnet ist, und der Umschalter 4 den zu diesem Ausgang $1_1$ führenden abzweigenden Wellenleiter 11 freigeben, und im anderen Schaltzustand der Umschalter 4 den zu diesem Ausgang $1_1$ führenden abzweigenden Wellenleiter 11 und der Torschalter 5 diesen Ausgang $1_1$ blockieren.

Beim Beispiel nach Figur 1 bedeutet dies z.B. für den obersten Verzweigungspunkt 3 der dritten Verzweigungsstufe $2_3$ und die beiden übereinanderliegenden Ausgänge $1_1$, zu denen die beiden von diesem obersten Verzweigungspunkt 3 abzweigenden Wellenleiter 11 führen, daß

- der Umschalter 4 dieses obersten Verzweigungspunktes 3 im einen Schaltzustand auf den zum oberen Ausgang $1_1$ führenden oberen Wellenleiter 11 geschaltet ist und diesen freigibt und den zum unteren Ausgang $1_1$ führenden unteren Wellenleiter 11 blockiert, während gleichzeitig der dem oberen Ausgang $1_1$ zugeordnete und in dem oberen abzweigenden Wellenleiter 11 angeordnete Torschalter 5 diesen oberen Ausgang $1_1$ freigibt und der dem unteren Ausgang $1_1$ zugeordnete und in dem unteren abzweigenden Wellenleiter 11 angeordnete Torschalter 5 diesen unteren Ausgang $1_1$ blockiert, und daß
- der Umschalter 4 im anderen Schaltzustand auf den zum unteren Ausgang $1_1$ führenden unteren Wellenleiter 11 geschaltet ist und diesen freigibt und den zum oberen Ausgang $1_1$ führenden oberen Wellenleiter 11 blockiert, während gleichzeitig der dem unteren Ausgang $1_1$ zugeordnete und in dem unteren Wellenleiter 11 angeordnete Torschalter 5 diesen unteren Ausgang $1_1$ freigibt und der dem oberen Ausgang $1_1$ zugeordnete und in dem oberen abzweigenden Wellenleiter 11 angeordnete Torschalter 5 diesen oberen Ausgang $1_1$ blockiert.

Insbesondere bedeutet dies, daß stets ein Torschalter 5 den ihm zugeordneten Ausgang $1_1$ freigibt, wenn der Umschalter 4 des betreffenden Verzweigungspunktes 3 auf den zu diesem Ausgang $1_1$ führenden abzweigenden Wellenleiter 11 geschaltet ist, und stets ein Torschalter 5 den ihm zugeordneten Ausgang $1_1$ blockiert, wenn der Umschalter 4 des betreffenden Verzweigungspunktes 3 den zu diesem Ausgang $1_1$ führenden abzweigenden Wellenleiter 11 blockiert.

Da die Schaltzustände des einem Ausgang $1_1$ zugeordneten Torschalters 5 durch die Schaltzustände des Umschalters 4 des betreffenden Verzweigungspunktes 3 der letzten Verzweigungsstufe $2_3$ fest vorgegeben sind, sind zusätzliche Steuerleitungen zur Wellenleiterstruktur 1 nicht nötig, sondern es können eine Steuerelektrodenanordnung 54 eines Torschalters 5 und eine Steuerelektrodenanordnung 54 eines Umschalters 4 durch eine elektrische Leitungsanordnung 7 elektrisch leitend miteinander verbunden sein, wodurch der elektrische Steueraufwand einer erfindungsgemäßen Schaltmatrix nicht höher als der einer herkömmlichen Schaltmatrix ist. Außerdem kann die elektrische Leitungsanordnung 7 vorteilhafterweise zusammen mit der Wellenleiterstruktur 1 auf einem Substrat 100 integriert werden.

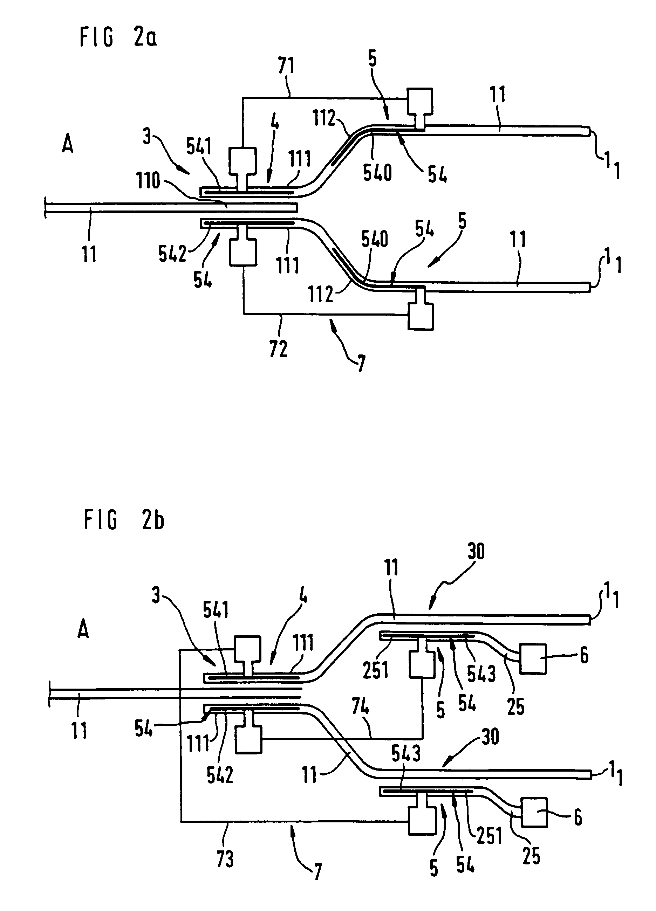

Die Umschalter 4 und Torschalter 5 können aus verschiedenartigen optischen Schaltern bestehen. In den Figuren 2a bis 2f sind verschiedene Beispiele unter Bezugnahme auf den obersten Verzweigungspunkt 3 der letzten Verzweigungsstufe $2_3$ in Figur 1 dargestellt, wobei diese Figuren den Ausschnitt A in Figur 1 in vergrößerter Darstellung zeigen.

Diese Beispiele sind in gleicher Weise auch bei jedem anderen Verzweigungspunkt 3 der letzten Verzweigungsstufe $2_3$ und insbesondere jedem Verzweigungspunkt der letzten Verzweigungsstufe jeder anderen erfindungsgemäßen $1 \times N$-Schaltmatrix verwendbar.

Beim Beispiel nach Figur 2a besteht der im Verzweigungspunkt 3 angeordnete Umschalter 4 aus einem mehr als zwei Schaltzustände aufweisenden Schalter, der

- in einem Schaltzustand auf den vom Verzweigungspunkt 3 abzweigenden und zum oberen Ausgang $1_1$ führenden oberen abzweigenden Wellenleiter 11 geschaltet ist und den von diesem Verzweigungspunkt 3 abzweigenden und zum unteren Ausgang $1_1$ führenden unteren Wellenleiter 11 blockiert,
- in einem anderen Schaltzustand dagegen auf den unteren abzweigenden Wellenleiter 11 geschaltet ist und den oberen abzweigenden Wellenleiter 11 blockiert und
- in einem weiteren Schaltzustand derart geschaltet ist, daß sowohl der obere als auch der untere abzweigenden Wellenleiter 11 gleichzeitig blockiert sind.

Der dem oberen Ausgang $1_1$ zugeordnete Torschalter 5 ist in dem zu diesem Ausgang $1_1$ führenden oberen abzweigenden Wellenleiter 11 und der dem unteren Ausgang $1_1$ zugeordnete Torschalter 5 in dem zu diesem Ausgang $1_1$ führenden unteren abzweigenden Wellenleiter 11 angeordnet und besteht jeweils aus einem Ein- und Ausschalter, der den betreffenden Wellenleiter 11 wahlweise freigibt oder blockiert.

Der Umschalter 4 kann beispielsweise aus einem bekannten TIC-Schalter (siehe B. Acklin, M. Schienle, B. Weiss, L. Stoll, G. Müller "Novel optical switches based on carrier injection in three and five waveguide couplers: TIC and SIC" Electron. Lett., 1994, Vol. 30, No. 3, S. 217) bestehen. Danach ist der Umschalter 4 prinzipiell so aufgebaut, daß ein Endabschnitt 110 des vom oberen Verzweigungspunkt 3 der zweiten Verzweigungsstufe $2_2$ abzweigenden und zum obersten Verzweigungspunkt 3 der dritten Verzweigungsstufe $2_3$ führenden Wellenleiters 11 und entgegengesetzte Endabschnitte 111 der vom obersten Verzweigungspunkt 3 abzweigenden Wellenleiter 11 auf beiden Seiten des Endabschnitts 110 des zum obersten Verzweigungspunkt 3 führenden Wellenleiters 11 in einem so geringen Abstand von diesem Wellenleiter 11 angeordnet sind, daß ein in diesem Wellenleiter 11 zu dessen Endabschnitt 110 gelangendes optisches Signal von diesem Endabschnitt 110 in den einen oder anderen abzweigenden Wellenleiter 11 überkoppelt, je nach dem wie die sich über den Endabschnitten 111 dieser abzweigenden Wellenleiter 11 befindlichen Elektroden 541 und 542 der Steuerelektrodenanordnung 54 dieses Umschalters 4 elektrisch geschaltet sind.

Der als Ein- und Ausschalter ausgebildete Torschalter 5 jedes der beiden vom obersten Verzweigungspunkt 3 abzweigenden Wellenleiter 11 weist eine Steuerelektrodenanordnung 54 in Form einer über einem Abschnitt 112 dieses abzweigenden Wellenleiters 11 sich erstreckenden einzelnen Steuerelektrode 540 auf, die das darunterliegende Material des abzweigenden Wellenleiters 11 je nach Schaltzustand derart beeinflußt, daß entweder ein vom Endabschnitt 111 dieses abzweigenden Wellenleiters 11 zugeführtes optisches Signal durchgelassen oder absorbiert wird. Dabei kann das durchgelassene Signal auch optisch verstärkt werden. Die ein Blockieren des betreffenden abzweigenden Wellenleiters 11 verursachende Absorption kann auch durch seitliche Abstrahlung des geführten Signals aus diesem Wellenleiter 11 in dem Längsabschnitt 112 ersetzt werden.

Die elektrische Leitungsanordnung 7 verbindet eine Elektrode 541 des Schalters 4 durch eine elektrische Leitung 71 mit der Elektrode 540 des im oberen abzweigenden Wellenleiter 11 angeordneten Torschalters 5 und die andere Elektrode 541 des Umschalters 4 durch eine elektrische Leitung 72 mit der Elektrode 540 des im unteren abzweigenden Wellenleiter 11 angeordneten Torschalters 5.

In einem Schaltzustand wird an die eine Elektrode 541 des Umschalters 4 und an die mit dieser Elektrode 541 verbundene Elektrode 540 eines Torschalters 5 eine Spannung $U_1$ und an die andere Elektrode 541 des Umschalters 4 und die mit dieser anderen Elektrode 541 verbundene Elektrode 540 des anderen Torschalters 5 eine andere Spannung $U_2$ angelegt.

Diese beiden Spannungen $U_1$ und $U_2$ bewirken beispielsweise, daß ein dem Umschalter 4 zugeführtes optisches Signal in den oberen abzweigenden Wellenleiter 11 überkoppelt und von dem in diesem Wellenleiter 11 angeordneten Torschalter 5 zum oberen Ausgang $1_1$ durchgelassen wird, während in den unteren abzweigenden Wellenleiter 11 allenfalls ein ungewollter geringer Anteil dieses Signals in diesen unteren abzweigenden Wellenleiter 11 überkoppelt, der von dem in diesem unteren abzweigenden Wellenleiter 11 angeordneten Torschalter 5 blockiert wird, so daß dieser Anteil nicht zum unteren Ausgang $1_1$ gelangt.

Liegt umgekehrt an der anderen Elektrode 541 des Umschalters 4 und der durch die Leitung 72 mit dieser anderen Elektrode 541 verbundenen Elektrode 540 des im unteren Wellenleiter 11 angeordneten Torschalters 5 die Spannung $U_1$ und an der einen Elektrode 541 des Umschalters 4 und an der mit dieser Elektrode 541 verbundenen Elektrode 540 des im oberen Wellenleiter 11 angeordneten Torschalters 5 die Spannung $U_2$, sind die Verhältnisse genau umgekehrt, d.h. das zugeführte optische Signal koppelt in den unteren abzweigenden Wellenleiter 11 über und wird von dem in diesem Wellenleiter 11 angeordneten Torschalter 5 zum unteren Ausgang $1_1$ durchgelassen, während allenfalls ein ungewollter Anteil dieses Signals in den oberen abzweigenden Wellenleiter 11 überkoppelt und von dem in diesem oberen Wellenleiter 11 angeordneten Torschalter 5 blockiert wird, so daß dieser Anteil nicht zum oberen Ausgang $1_1$ gelangt.

Die Beispiele nach den Figuren 2b bis 2f unterscheiden sich vom Beispiel nach Figur 2a im wesentlichen dadurch, daß jeder Torschalter 5 aus einem Umschalter zum wahlweisen Umschalten zwischen dem abzweigenden Wellenleiter 11, in dem dieser Torschalter 5 angeordnet ist, und einem von diesem Wellenleiter 11 in einem zusätzlichen Verzweigungspunkt 30 abzweigenden Wellenleiter 25 besteht, der zu einem optischen Sumpf 6 führt.

Beim Beispiel nach Figur 2b ist der im Verzweigungspunkt 3 angeordnete Umschalter 4 mit dem Umschalter 4 nach Figur 2a baulich identisch, jeder Torschalter 5 ist dagegen ein Umschalter in Form eines allgemein bekannten steuerbaren optischen Richtkopplers.

Der Richtkoppler des in dem vom Verzweigungspunkt 3 zum oberen bzw. unteren Ausgang $1_1$ führenden oberen bzw. unteren abzweigenden Wellenleiters 11 ist dadurch gebildet, daß ein Endabschnitt 251 des Wellenleiters 25, der von diesem oberen bzw. unteren abzweigenden Wellenleiter 11 abzweigt, in einem derart geringen Abstand vom oberen bzw. unteren abzweigenden Wellenleiter 11 im zusätzlichen Verzweigungspunkt 30 angeordnet ist, daß zwischen diesem Endabschnitt 251 und dem oberen bzw. unteren abzweigenden Wellenleiter 11 optische Leistung überkoppeln kann, wobei diese Überkopplung in bekannter Weise durch eine Steuerelektrodenanordnung 54 derart gesteuert werden kann, daß ein im oberen bzw. unteren abzweigenden Wellenleiter 11 geführtes optisches Signal entweder in diesem Wellenleiter 11 zum oberen bzw. unteren Ausgang $1_1$ weitergeleitet wird und nicht in den zum optischen Sumpf 6 führenden Wellenleiter 25 überkoppelt oder in den zum optischen Sumpf 6 führenden Wellenleiter 25 überkoppelt und nicht im oberen bzw. unteren abzweigenden Wellenleiter 11 zum oberen bzw. unteren Ausgang $1_1$ weitergeleitet wird. Eine in den zum optischen Sumpf 6 führenden Wellenleiter 25 überkoppelnde Strahlung wird im optischen Sumpf 6 unschädlich gemacht.

Die Steuerelektrodenanordnung 54 kann beispielsweise aus einer über dem oberen bzw. unteren abzweigenden Wellenleiter 11 oder dem von diesem Wellenleiter 11 abzweigenden und zum optischen Sumpf 6 führenden Wellenleiter 25 im Bereich des Endabschnitts 251 des Wellenleiters 25 angeordneten Elektrode 543 bestehen.

Beim Beispiel nach Figur 2b ist eine solche Elektrode 543 jeweils über dem Endabschnitt 251 des zum optischen Sumpf 6 führenden Wellenleiters 25 vorgesehen. Eine elektrische Leitungsanordnung 7 weist eine elektrische Leitung 74 auf, welche die Elektrode 543 über dem Endabschnitt 251 des vom oberen abzweigenden Wellenleiter 11 abzweigenden Wellenleiters 25 mit der über dem im Verzweigungspunkt 3 liegenden Endabschnitt 111 des unteren abzweigenden Wellenleiters 11 angeordneten Elektrode 542 verbunden ist, während die Elektrode 543 über dem Endabschnitt 251 des vom unteren abzweigenden Wellenleiter 11 abzweigenden Wellenleiters 25 mit der über dem im Verzweigungspunkt 3 liegenden Endabschnitt 111 des oberen abzweigenden Wellenleiters 11 angeordneten Elektrode 541 durch eine elektrische Leitung 73 der Leitungsanordnung 7 verbunden ist.

Durch diese Art der elektrischen Verbindung der Elektroden 541, 542 und 543 kann ähnlich wie beim Beispiel nach Figur 2a

- durch Anlegen einer Spannungsdifferenz einer Polarität zwischen der Leitung 73 und der Leitung 74 der Schaltzustand, bei dem das im zuführenden Wellenleiter 11 zum Verzweigungspunkt 3 gelangende optische Signal in den oberen abzweigenden Wellenleiter 11 überkoppelt und dem oberen Ausgang $1_1$ zugeführt wird, während gleichzeitig ein in den unteren abzweigenden Wellenleiter 11 überkoppelnder ungewollter Anteil dieses zugeführten Signals in den von diesem unteren abzweigenden Wellenleiter 11 abgezweigten Wellenleiter 25 überkoppelt und in dem mit diesem Wellenleiter 25 verbundenen Sumpf 6 unschädlich gemacht wird, und

- durch Anlegen einer Spannungsdifferenz der entgegengesetzten Polarität zwischen der Leitung 73 und der Leitung 74 der andere Schaltzustand, bei dem das dem Verzweigungspunkt 3 zugeführte optische Signal in den unteren abzweigenden Wellenleiter 11 überkoppelt und dem unteren Ausgang $1_1$ zugeführt wird, während gleichzeitig ein in den oberen abzweigenden Wellenleiter 11 überkoppelnder Anteil dieses zugeführten Signals in den von diesem oberen abzweigenden Wellenleiter 11 abgezweigten Wellenleiter 25 überkoppelt und in dem mit dem diesem Wellenleiter 25 verbundenen optischen Sumpf 6 unschädlich gemacht wird, erreicht werden.

Die Beispiele nach den Figuren 2a und 2b unterscheiden sich von den im folgenden beschriebenen Beispielen 2c bis 2f dadurch, daß der im Verzweigungspunkt 3 angeordnete Umschalter 4 einen anderen Aufbau als die beiden Torschalter 5 aufweisen.

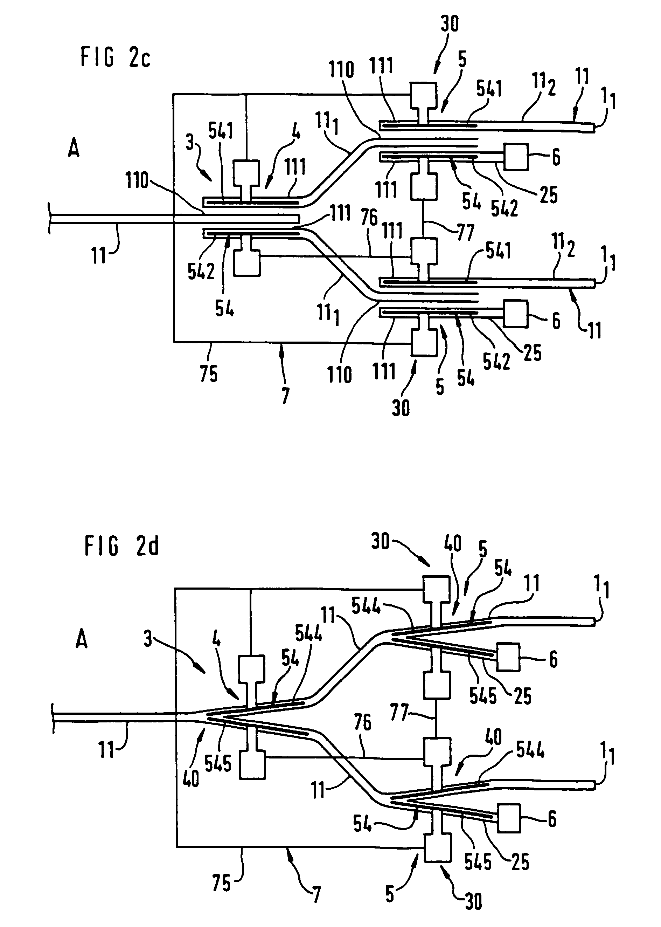

Im Gegensatz dazu haben bei den Beispielen nach den Figuren 2c bis 2f der im Verzweigungspunkt 3 angeordnete Umschalter 4 und die ebenfalls als Umschalter ausgebildeten Torschalter 5 vorteilhafterweise im wesentlichen den gleichen Aufbau.

Beim Beispiel nach Figur 2c besteht der im Verzweigungspunkt 3 angeordnete Umschalter 4 wie bei den Beispielen nach den Figuren 2a und 2b aus einem Umschalter mit mehr als zwei Schaltzuständen. Darüber ist jeder Torschalter 5 ein Umschalter wie der Umschalter 4, beispielsweise ein TIC-Schalter.

Bei dem Beispiel nach Figur 2c ist sowohl der vom Verzweigungspunkt 3 zum oberen Ausgang $1_1$ führende obere abzweigende Wellenleiter 11 als auch der vom Verzweigungspunkt 3 zum unteren Ausgang $1_1$ führende untere abzweigende Wellenleiter 11 in je einen ersten Wellenleiterabschnitt $11_1$ und je einen zweiten Wellenleiterabschnitt $11_2$ unterteilt, der vom ersten Wellenleiterabschnitt getrennt ist.

Der erste Wellenleiterabschnitt $11_1$ jedes abzweigenden Wellenleiters 11 weist einerseits einen im Verzweigungspunkt 3 liegenden Endabschnitt 111, der den Endabschnitt 111 des Umschalters 4 nach Figur 2a bildet, und andererseits einen entgegengesetzten Endabschnitt 110 auf, der dem Endabschnitt 110 im Umschalter 4 nacn Figur 2a entspricht.

Der zweite Abschnitt $11_2$ jedes abzweigenden Wellenleiters 11 weist einerseits einen im geringen Abstand vom Endabschnitt 110 des ersten Wellenleiterabschnitts $11_1$ dieses abzweigenden Wellenleiters 11 angeordneten Endabschnitt 111 auf, der dem Endabschnitt 111 im Umschalter 4 nach Figur 2a entspricht, und ist andererseits mit dem Ausgang $1_1$ verbunden, zu dem dieser abzweigende Wellenleiter 11 führt.

Auf der vom zweiten Wellenleiterabschnitt $11_2$ jedes abzweigenden Wellenleiters 11 abgekehrten Seite des Endabschnitts 110 des ersten Abschnitts $11_1$ dieses abzweigenden Wellenleiters ist im geringen Abstand ein dem Endabschnitt 111 im Umschalter 4 nach Figur 2a entsprechender Endabschnitt 111 eines Wellenleiters 25 angeordnet, der den von diesem abzweigenden Wellenleiter 11 in dem zusätzlichen Verzweigungspunkt 30 abzweigenden Wellenleiter bildet und zu einem optischen Sumpf 6 führt.

Der Endabschnitt 110 des ersten Wellenleiterabschnitts $11_1$ jedes abzweigenden Wellenleiters 11 und die benachbarten Endabschnitte 111 des zweiten Wellenleiterabschnitts $11_2$ dieses abzweigenden Wellenleiters 11 und des von diesem Wellenleiter 11 abzweigenden Wellenleiters 25 definieren zusammen mit einer im Bereich dieser Endabschnitte 110 und 111 angeordneten Elektrodenanordnung 54 den in diesem abzweigenden Wellenleiter 11 angeordneten Torschalter 5 in Form eines Umschalters.

Die Elektrodenanordnung 54 des in jedem abzweigenden Wellenleiter 11 angeordneten Torschalters 5 in Form des Umschalters besteht aus einer über dem Endabschnitt 111 des zweiten Wellenleiterabschnitts $11_2$ dieses abzweigenden Wellenleiters 11 angeordneten Elektrode 541 und aus einer über dem Endabschnitt 111 des von diesem abzweigenden Wellenleiter 11 abgezweigten Wellenleiters 25 angeordneten Elektrode 542.

Der Endabschnitt 110 des zum Verzweigungspunkt 3 führenden Wellenleiters 11 und die auf beiden Seiten dieses Endabschnitts 110 angeordneten Endabschnitte 111 des ersten Wellenleiterabschnitts $11_1$ des oberen und unteren abzweigenden Wellenleiters 11 definieren zusammen mit einer im Bereich dieser Endabschnitte 110 und 111 angeordneten Elektrodenanordnung 54 den in diesem Verzweigungspunkt 3 angeordneten Umschalter 4.

Die Elektrodenanordnung 54 des Umschalters 4 im Verzweigungspunkt 3 besteht aus einer über dem Endabschnitt 111 des ersten Wellenleiterabschnitts $11_1$ des oberen abzweigenden Wellenleiters 11 angeordneten Elektrode 541 und aus einer über dem Endabschnitt 111 des ersten Wellenleiterabschnitts $11_1$ des unteren abzweigenden Wellenleiters 11 angeordneten Elektrode 542.

Eine elektrische Leitungsanordnung 7 weist eine elektrische Leitung 75 auf, welche die Elektroden 541 der Endabschnitte 111 des ersten und zweiten Wellenleiterabschnitts $11_1$ und $11_2$ des oberen abzweigenden Wellenleiters 11 und die Elektrode 542 des Endabschnitts 111 des vom unteren abzweigenden Wellenleiter 11 abgezweigten Wellenleiters 25 verbindet, und eine elektrische Leitung 76, welche die Elektroden 541 der Endabschnitte 111 des ersten und zweiten Wellenleiterabschnitts $11_1$ und $11_2$ des unteren abzweigenden Wellenleiters 11 und die Elektrode 542 des Endabschnitts 111 des vom oberen abzweigenden Wellenleiter 11 abgezweigten Wellenleiters 25 verbindet.

Durch diese Art der elektrischen Verbindung der Elektroden 541, 542 und 543 kann ähnlich wie beim Beispiel nach Figur 2b

- durch Anlegen einer Spannungsdifferenz einer Polarität zwischen der Leitung 75 und der Leitung 76 der Schaltzustand, bei dem das dem Endabschnitt 110 des zuführenden Wellenleiters 11 zugeführte optische Signal in den ersten Wellenleiterabschnitt $11_1$ des zum oberen Ausgang $1_1$ führenden oberen abzweigenden Wellenleiters 11 und von diesem ersten Wellenleiterabschnitt $11_1$ in den zweiten Wellenleiterabschnitt $11_2$ dieses oberen Wellenleiters 11 überkoppelt und zum oberen Ausgang $1_1$ gelangt, während ein in den ersten Wellenleiterabschnitt $11_1$ des zum unteren Ausgang $1_1$ führenden unteren abzweigenden Wellenleiters 11 überkoppelnder ungewollter Anteil dieses Signals in den von diesem unteren Wellenleiter 11 abgezweigten Wellenleiter 25 überkoppelt und dem mit diesem Wellenleiter 25 verbundenen optischen Sumpf 6 zugeführt wird, und
- durch Anlegen einer Spannungsdifferenz der entgegengesetzten Polarität zwischen der Leitung 75 und der Leitung 76 der Schaltzustand erreicht wird, bei dem das dem Endabschnitt 110 des zuführenden Wellenleiters 11 zugeführte optische Signal in den ersten Wellenleiterabschnitt $11_1$ des zum unteren Ausgang $1_1$ führenden unteren abzweigenden Wellenleiters 11 und von diesem ersten Wellenleiterabschnitt $11_1$ in den zweiten Wellenleiterabschnitt $11_2$ dieses unteren Wellenleiters 11 überkoppelt und dem unteren Ausgang $1_1$ zugeführt wird, während ein in den ersten Wellenleiterabschnitt $11_1$ des oberen abzweigenden Wellenleiters 11 übergekoppelter ungewollter Anteil dieses Signals in den von diesem oberen abzweigenden Wellenleiter 11 abgezweigten Wellenleiter 25 überkoppelt und dem mit diesem Wellenleiter 25 verbundenen optischen Sumpf 6 zugeführt wird.

Überdies ist ein weiterer Schaltzustand möglich bei dem weder im Umschalter 4 noch in den Torschaltern 5 zugeführte Signale überkoppeln und weitergeleitet werden.

Die Anordnung nach Figur 2d unterscheidet sich von der Anordnung nach Figur 2c dadurch, daß anstelle der TIC-Schalter bekannte und ebenfalls mehr als zwei Schaltzustände aufweisenden DOS-Schalter als Umschalter verwendet sind, bei denen im Verzweigungspunkt 3 und den zusätzlichen Verzweigungspunkten 30 je eine Wellenleitergabel 40 mit einer Elektrodenanordnung 54 angeordnet ist.

Im Verzweigungspunkt 3 spaltet sich der zu diesem Punkt führende Wellenleiter 11 im Bereich der Gabel 40 in den oberen und unteren abzweigenden Wellenleiter 11 auf, der zum oberen bzw. unteren Ausgang $1_1$ führt. Vom oberen bzw. unteren abzweigenden Wellenleiter 11 zweigt in dem betreffenden zusätzlichen Verzweigungspunkt 30 im Bereich der dort angeordneten Gabel 40 der von diesem Wellenleiter 11 abzweigende Wellenleiter 25 der zu einem optischen Sumpf 6 führt.

Die Elektrodenanordnung 54 weist im Bereich jeder Gabel 40 zwei Elektroden 544 und 545 auf. Bei der Gabel 40 im Umschalter 4 ist die Elektrode 544 über dem Gabelzweig, von dem der obere abzweigende Wellenleiter 11 abzweigt, und die Elektrode 545 über dem Gabelzweig, von dem der untere abzweigende Wellenleiter 11 abzweigt, angeordnet. Bei der Gabel 40 im Torschalter 5 jedes abzweigenden Wellenleiters 11 ist die Elektrode 544 über dem in diesem abzweigenden Wellenleiter 11 angeordneten und einen Abschnitt dieses Wellenleiters 11 bildenden Gabelzweig und die Elektrode 545 über dem Gabelzweig, von dem der von diesem Wellenleiter 11 abgezweigte Wellenleiter 25 abzweigt, angeordnet.

Im Vergleich der Beispiele nach den Figuren 2c und 2d entsprechen sowohl im Umschalter 4 als auch in jedem Torschalter 5 die Elektrode 544 der Elektrode 541 und die Elektrode 545 der Elektrode 542.

Beim Beispiel nach Figur 2d läßt sich durch die gleiche Leitungsanordnung 7 aus Leitungen 75 und 76, welche die Elektroden 544 und 545 in der gleichen Weise wie die Elektroden 541 bzw. 542 des Beispiels nach Figur 2c elektrisch verbinden, das genau gleiche Schaltverhalten wie beim Beispiel nach Figur 2c erreichen.

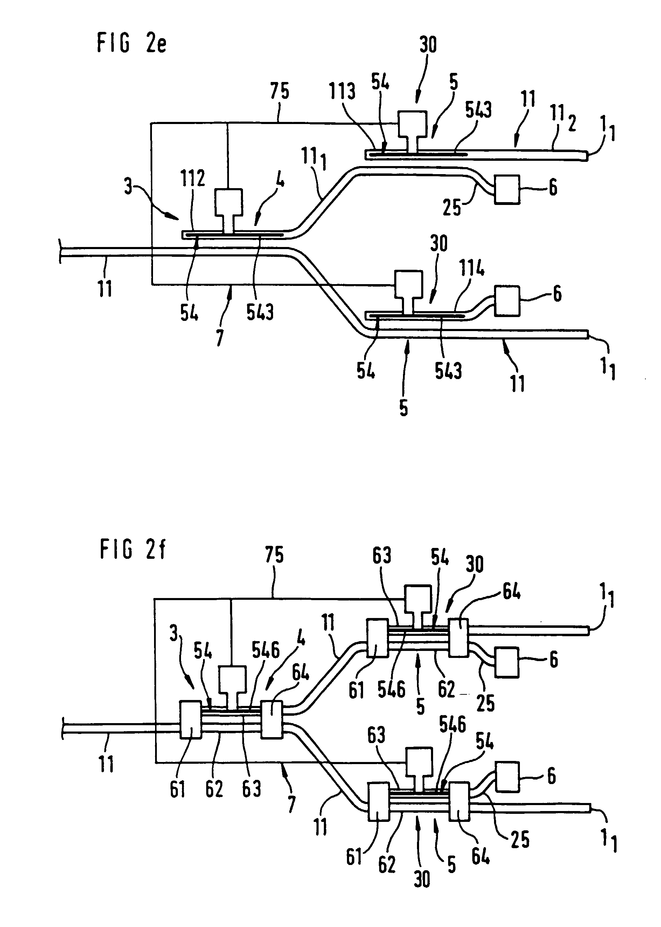

Beim Beispiel nach Figur 2e bestehen der Umschalter 4 und die Torschalter 5 jeweils aus einem Umschalter in Form eines bekannten steuerbaren optischen Richtkopplers, wie er beispielsweise beim Beispiel nach Figur 2b für die Torschalter 5 verwendet ist.

Beim Beispiel nach Figur 2e ist es z. B. so eingerichtet, daß der zum Verzweigungspunkt 3 führende Wellenleiter 11 in diesem Verzweigungspunkt 3 ohne Unterbrechung in den zu einem Ausgang $1_1$ führenden abzweigenden Wellenleiter 11, beispielsweise den zum unteren Ausgang $1_1$ führenden unteren abzweigenden Wellenleiter 11 übergeht. Der zum anderen, im Beispiel oberen Ausgang $1_1$ führende abzweigende Wellenleiter 11 ist ähnlich wie beim Beispiel nach Figur 2b in einen ersten Wellenleiterabschnitt $11_1$ und einen davon getrennten zweiten Wellenleiterabschnitt $11_2$ unterteilt.

Der erste Wellenleiterabschnitt $11_1$ weist einen Endabschnitt 112 auf, der im Bereich des Umschalters 4 im Verzweigungspunkt 3 im geringen Abstand von dem zu diesem Verzweigungspunkt 3 führenden Wellenleiter 11 angeordnet ist und zusammen mit diesem Wellenleiter 11 und einer Elektrodenanordnung 54 den Richtkoppler des Umschalters 4 definiert.

Der erste Wellenleiterabschnitt $11_1$ des im Beispiel oberen abzweigenden Wellenleiters 11 geht im zusätzlichen Verzweigungspunkt 30 ohne Unterbrechung in den von diesem oberen abzweigenden Wellenleiter 11 abgezweigten Wellenleiter 25 über, der zu einem optischen Sumpf 6 führt.

Der zweite Wellenleiterabschnitt $11_2$ des oberen abzweigenden Wellenleiters 11 führt zum oberen Ausgang $1_1$ und weist im zusätzlichen Verzweigungspunkt 30 dieses oberen Wellenleiters 11 im Bereich des in diesem oberen Wellenleiter 11 angeordneten Torschalters 5 einen Endabschnitt 113 auf, der zusammen mit dem ersten Wellenleiterabschnitt $11_1$ und einer Elektrodenanordnung 54 den Richtkoppler dieses Torschalters 5 definiert.

Vom unteren abzweigenden Wellenleiter 11 zeigt in einem zusätzlichen Verzweigungspunkt 30 ein Wellenleiter 25 ab, der zu einem optischen Sumpf führt und im Bereich des in diesem unteren abzweigenden Wellenleiter 11 angeordneten Torschalters 5 einen im geringen Abstand vom unteren abzweigenden Wellenleiten 11 angeordneten Endabschnitt 114 aufweist, der zusammen mit diesem Wellenleiter 11 und einer Elektrodenanordnung 54 den Richtkoppler dieses Torschalters 5 definiert.

Die Elektrodenanordnung 54 des Umschalters 4 und jedes Torschalters 5 dieses Beispiels nach Figur 2e ist durch je eine über dem Endabschnitt 112, dem Endabschnitt 113 bzw. dem Endabschnitt 114 angeordnete Elektrode 543 gebildet, die durch beispielsweise eine Leitungsanordnung 7 in Form einer Leitung 75 elektrisch leitend miteinander verbunden sind. Durch die derart elektrisch miteinander verbundenen Elektroden 543 können die Richtkoppler des Umschalters 4 und der Torschalter 5 in der richtigen Weise gesteuert werden, so daß ein in dem zum Verzweigungspunkt 3 führenden Wellenleiter 11 zugeführtes optisches Signal entweder nur zum oberen Ausgang $1_1$ oder nur zum unteren Ausgang $1_1$ gelangt und ungewollte Anteile dieses Signals in den oberen bzw. unteren Sumpf 6 und nicht zu einem Ausgang $1_1$ gelangen.

Das Beispiel nach Figur 2f unterscheidet sich vom Beispiel nach der Figur 2e lediglich dadurch, daß die optischen Richtkoppler des Beispiels nach Figur 2e beim Beispiel nach Figur 2f durch bekannte integriert optische Mach-Zehnder-Interferometer ersetzt sind.

Jedes der Interferometer weist in bekannter Weise einen optischen Koppler 61, der ein in einem zuführenden Wellenleiter 11 zugeführtes optisches Signal auf zwei aus optischen Wellenleitern bestehende Interferometerarme 62 und 63 aufteilt, und einen optischen Koppler 64 auf, der die in den Interferometerarmen zugeführten Signalanteile zur Interferenz miteinander bringt und danach in Abhängigkeit eines an einer Elektrodenanordnung 54 anliegenden elektrischen Steuersignals auf den einen oder anderen zweier fortführender Wellenleiter 11 bzw. 11 und 25 schaltet.

Die Elektrodenanordnung 54 jedes Interferometers besteht beispielsweise aus einer über dem einen Interferometerarm 63 angeordneten Elektrode 546, die funktionsmäßig der Elektrode 543 des Beispiels nach Figur 2e entspricht. Eine aus einer elektrischen Leitung 75 bestehende Leitungsanordnung 7, welche die drei Elektroden 546 miteinander verbindet, sorgt dafür, daß das Beispiel nach Figur 2f das gleiche Schaltverhalten wie das Beispiel nach Figur 2e aufweist.

Die erfindungsgemäße 1×N-Schaltmatrix ist prinzipiell und insbesondere in den dargestellten Ausführungsbeispielen bidirektional betreibbar, d.h. jeder Ausgang $1_1$ kann Eingang für ein optisches Signal sein, das in der Wellenleiterstruktur 1 zum einzigen Eingang $1_0$ geführt werden kann, so daß der bisherige Eingang $1_0$ auch Ausgang sein kann. Dem ist in den Ansprüchen dadurch Rechnung getragen, daß $1_0$ mit "Eingang/Ausgang" und $1_1$ mit "Ausgang/Eingang" bezeichnet ist. Diese vorteilhafte Eigenschaft der erfindungsgemäßen 1xN-Schaltmatrix ist für die erfindungsgemäße NxN-Schaltmatrix von Bedeutung.

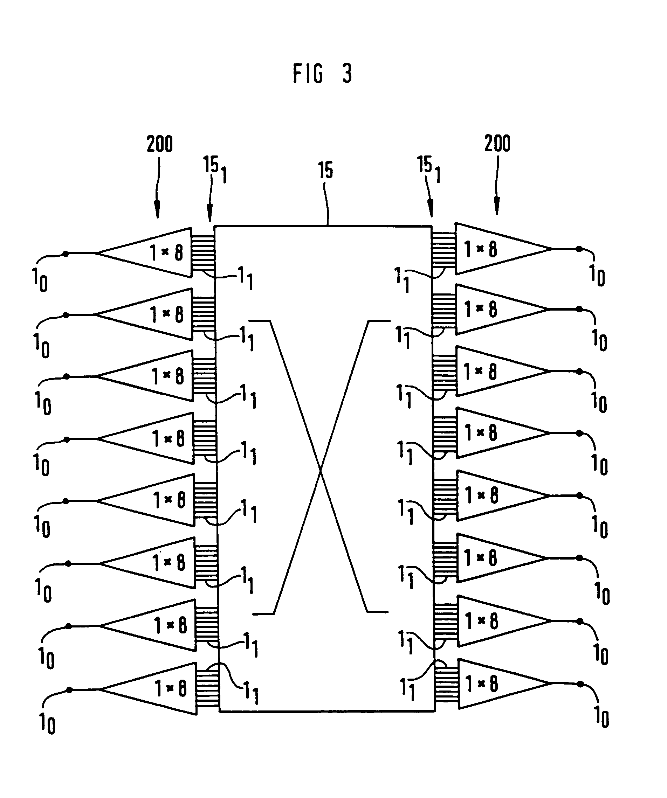

Eine erfindungsgemäße NxN-Schaltmatrix ist in der Figur 3 für N = 8 beispielhaft und schematisch dargestellt. Diese Schaltmatrix weist ein zentrales optisches Vermittlungsnetzwerk 15 mit einer Anschluß-Reihe $15_1$ aus jeweils $8{\times}8 = 64$ optischen Anschlüssen auf der linken Seite und eine Anschluß-Reihe $15_1$ aus jeweils $8{\times}8 = 64$ optischen Anschlüssen auf der rechten Seite dieses Netzwerkes auf, wobei jeder Anschluß als optischer Ein- und/oder Ausgang des Vermittlungsnetzwerk 15 dient und wobei das Vermittlungsnetzwerk 15 intern derart ausgebildet ist, daß jeder Anschluß der Anschluß-Reihe $15_1$ auf der linken Seite optisch mit jedem Anschluß Anschluß-Reihe $15_1$ auf der rechten Seite verbindbar ist und umgekehrt. Das Vermittlungsnetzwerk 15 kann beispielsweise ein allgemein bekanntes Perfect

EP 0 782 809 B1

Shuffle sein.

Auf der linken Seite des Vermittlungsnetzwerks 15 ist eine Matrix-Reihe 200 aus jeweils acht erfindungsgemäßen optischen 1x8-Schaltmatrizen angeordnet, wobei jede 1x8-Schaltmatrix je einen optischen Eingang/Ausgang $1_0$ und je acht optische Ausgänge/Eingänge $1_1$ aufweist, von denen bei jeder 1x8-Schaltmatrix jeweils nur einer mit diesem Bezugszeichen $1_1$ versehen ist.

Auf der rechten Seite des optischen Vermittlungsnetzwerkes 15 befindet sich ebenfalls eine Matrix-Reihe 200 aus jeweils acht erfindungsgemäßen optischen 1x8-Schaltmatrizen, wobei jede 1x8-Schaltmatrix je einen optischen Eingang/Ausgang $1_0$ und je acht optische Ausgänge/Eingänge $1_1$ aufweist, von denen bei jeder 1x8-Schaltmatrix wiederum jeweils nur einer mit diesem Bezugszeichen $1_1$ versehen ist.

Die insgesamt 8x8 = 64 optischen Ausgänge/Eingänge $1_1$ der acht optischen 1x8-Schaltmatrizen der Matrix-Reihe 200 auf der linken Seite des Vermittlungsnetzwerks 15 sind parallel mit dem 8x8 = 64 optischen Anschlüssen der Anschluß-Reihe $15_1$ auf dieser linken Seite verbunden und die insgesamt 8x8 = 64 optischen Ausgänge $1_1$ der acht optischen 1x8-Schaltmatrizen der Matrix-Reihe 200 auf der rechten Seite des Vermittlungsnetzwerks 15 sind parallel mit den 8x8 = 64 optischen Anschlüssen der Anschluß-Reihe $15_1$ auf dieser rechten Seite verbunden.

Die insgesamt acht optischen Eingänge/Ausgänge $1_0$ der acht optischen 1x8-Schaltmatrizen der Matrix-Reihe 200 auf der linken Seite des Vermittlungsnetzwerks 15 bilden die Eingänge oder Ausgänge der 8x8-Schaltmatrix und die insgesamt acht optischen Eingänge/Ausgänge $1_0$ der acht optischen 1x8-Schaltmatrizen der Matrix-Reihe 200 auf der rechten Seite des Vermittlungsnetzwerks 15 bilden die acht Ausgänge bzw. Eingänge der 8x8-Schaltmatrix, die nicht nur im Fall N = 8 bidirektional betreibbar ist.

Jede 1x8-Schaltmatrix der Figur 3 kann aus der beispielhaften 1x8-Schaltmatrix nach Figur 1 bestehen.

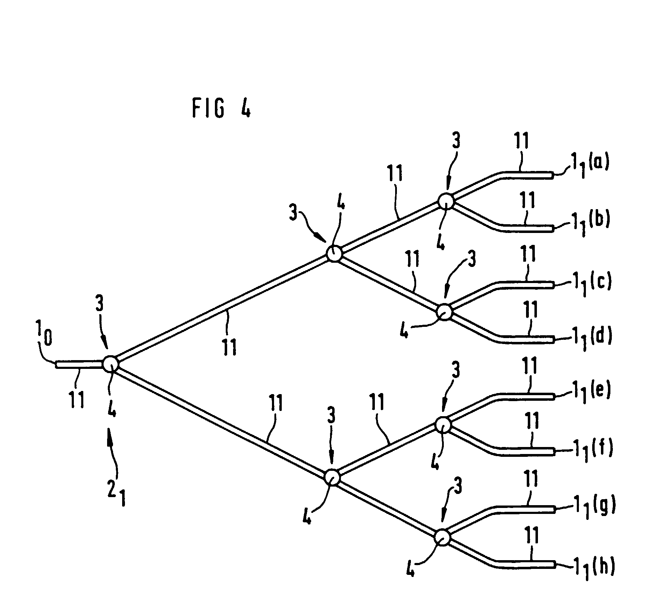

Die Figur 4 zeigt zum Vergleich mit der erfindungsgemäßen 1xN-Schaltmatrix nach Figur 1 eine herkömmliche 1xN-Schaltmatrix ohne Torschalter 5, wobei ansonsten übereinstimmende Teile mit den gleichen Bezugszeichen versehen sind.

Die erfindungsgemäßen 1xN-Schaltmatrizen und NxN-Schaltmatrizen haben den Vorteil, daß die Nebensprechunterdrückung stark verbessert ist, kein zusätzlicher Steuerungsaufwand erforderlich ist, die Einfügedämpfung nur minimal erhöht ist und kein zusätzlicher Herstellungsaufwand erforderlich ist.

Bei der erfindungsgemäßen 1xN-Schaltmatrix erhöht sich für jeden Lichtweg vom Eingang/Ausgang $1_0$ zu einem Ausgang/Eingang $1_1$ die Nebensprechunterdrückung um die des Torschalters 5.

Es werden im folgenden die Daten der erfindungsgemäßen 1x8Schaltmatrix nach Figur 1 mit der herkömmlichen 1x8-Schaltmatrix nach Figur 4 verglichen, wobei angenommen ist, daß sowohl die Umschalter 4 als auch die Torschalter 5 TIC-Schalter mit mehr als zwei Schaltzuständen sind. Zur besseren Unterscheidung der Ausgänge/Eingänge $1_1$ sind in den Figuren 1 und 4 diese Ausgänge/Eingänge zusätzlich mit in Klammern stehenden Buchstaben a bis h versehen.

Wird beispielsweise der Umschalter 4 im obersten Verzweigungspunkt 3 der letzten Verzweigungsstufe $2_3$ so geschaltet, daß das Signallicht über den oberen der beiden von diesem obersten Verzweigungspunkt 3 abzweigenden Wellenleiter 11 zum Ausgang a gelenkt, wird gleichzeitig das Nebensprechlicht aus dem zum Ausgang b führenden unteren der beiden von diesem obersten Verzweigungspunkt 3 abzweigenden Wellenleiter 11 durch den von diesem unteren abzweigenden Wellenleiter 11 abgezweigten Wellenleiter 25 in den mit diesem Wellenleiter verbundenen Sumpf 6 geleitet.

Für die Ansteuerung der 1x8-Schaltmatrix sei angenommen, daß nur diejenigen Umschalter 4 und Torschalter 5 elektrisch angesteuert werden, durch die der beabsichtigte Lichtweg führt. Entsprechend der Konstruktion der erfindungsgemäßen 1x8-Schaltmatrix werden in diesem Fall nur zwei Torschalter 5 angesteuert.

Wird beispielsweise der vom Eingang $1_0$ zum Ausgang a führende Lichtweg $\alpha$ ausgewählt, so wird der Umschalter 4 des Verzweigungspunktes 3 der ersten Verzweigungsstufe $1_1$ auf den von diesem Verzweigungspunkt 3 abzweigenden oberen Wellenleiter 11 geschaltet, der zum oberen Verzweigungspunkt 3 der zweiten Verzweigungsstufe $2_2$ führt. Der in diesem Verzweigungspunkt 3 befindliche Umschalter 4 wird auf den von diesem Verzweigungspunkt 3 abzweigenden oberen Wellenleiter 11 geschaltet, der zum obersten Verzweigungspunkt 3 der dritten Verzweigungsstufe $2_3$ führt. Der in diesem obersten Verzweigungspunkt 3 befindliche Umschalter 4 wird auf den von diesem obersten Verzweigungspunkt 3 zum Ausgang a führenden oberen abzweigenden Wellenleiter 11 geschaltet. Der in diesem Wellenleiter 11 befindliche Torschalter 5 wird so geschaltet, daß das Signallicht zu diesem Ausgang a gelangt. Dagegen wird der Torschalter 5, der sich in dem vom obersten Verzweigungspunkt 3 zum Ausgang b führenden unteren abzweigenden Wellenleiter 11 befindet, so geschaltet, daß das in diesem Wellenleiter 11 geführte Nebensprechlicht nicht zum Ausgang b, sondern zu dem mit diesem Torschalter 5 durch den von diesem unteren abzweigenden Wellenleiterll abgezweigten Wellenleiter 25 verbundenen Sumpf 6 geleitet wird. Alle übrigen Umschalter 4 und Torschalter 5 befinden sich im dritten Schaltzustand, bei denen durch die Umschalter 4 und Torschalter 5 kein Signallicht geht.

Es sei für jeden Umschalter 4 und jeden Torschalter 5 angenommen, daß die Transmission bei freigegebenem Lichtweg -1 dB, bei blockiertem Lichtweg -11 dB und im dritten Schaltzustand, bei welchem beide Lichtwege gesperrt sein sollen, -6 dB beträgt.

9

Für diesen Fall zeigt die folgende Tabelle die Nebensprechleistungen der 1x8-Schaltmatrix nach Figur 1 im Vergleich zur 1x8-Schaltmatrix nach Figur 4 für den Fall, daß der oberste Ausgang a beider Matrizen über den Lichtweg a angesteuert wird.

| Ausgang | Lichtleistung Figur 4 [dB] | Lichtleistung Figur 1 [dB] | Nebensprechen Figur 4 [dB] | Nebensprechen Figur 1 [dB] | Verbesserung [dB] |
|---|---|---|---|---|---|
| a | -3 | -4 | - | - | -1 |
| b | -13 | -24 | -10 | -20 | 10 |
| c | -18 | -24 | -15 | -20 | 5 |
| d | -18 | -24 | -15 | -20 | 5 |
| e | -23 | -29 | -20 | -25 | 5 |
| f | -23 | -29 | -20 | -25 | 5 |
| g | -23 | -29 | -20 | -25 | 5 |
| h | -23 | -29 | -20 | -25 | 5 |

Diese Transmissionswerte zeigen, daß die erfindungsgemäße 1×8-Schaltmatrix insbesondere auf dem zum Ausgang b führenden Hauptnebensprechweg eine erhebliche Verbesserung der Nebensprechunterdrückung um 10 dB bewirkt. Der Preis hierfür ist eine nur geringfügige Erhöhung der Einfügedämpfung um 1 dB. Insgesamt wird das nutzbare Fenster (= Leistungsunterschied des leistungsstärksten Nebensprechkanals vom Nutzkanal) der erfindungsgemäßen 1x8-Schaltmatrix gegenüber der herkömmlichen 1x8-Schaltmatrix um 10 dB erhöht.

Für eine mit diesen erfindungsgemäßen 1x8-Schaltmatrizen aufgebaute 8x8-Schaltmatrix kann eine entsprechende Vergrößerung des Fensters von 20 dB erwartet werden, was aus systemtechnischer Sicht außerordentlich vorteilhaft ist.

Generell ergibt sich für eine erfindungsgemäße NxN-Schaltmatrix die "Worst case"-Nebensprechunterdrückung CT zu

$$CT = 2\,CT_1 + 2\,CT_2 - 10\log(\log_2(N)),$$

wobei $CT_1$ die Nebensprechunterdrückung eines Torschalters 5 und $CT_2$ die Nebensprechunterdrückung eines Umschalters 4 bedeuten, die Dämpfungswerte in dB angegeben sind und die in R.A. Spanke "Architectures for large nonblocking optical space switches", IEEE J. Quantum Electronics, Vol. QE-22, No. 6, S. 964, 1987, angegebene Näherung verwendet ist.

Bei herkömmlichen N×N-Schaltmatrizen ohne erfindunsgemäße Torschalter 5, bei denen $CT_1$ fortfällt, kann die Nebensprechunterdrückung schlechter als 20 dB sein.

**Patentansprüche**

1. Optische 1×N-Schaltmatrix in Baumstruktur mit einem optischen Eingang/Ausgang ($1_0$) und einer Anzahl N optischer Ausgänge/Eingänge ($1_1$), bestehend aus

    - einer den Eingang/Ausgang ($1_0$) mit jedem Ausgang/Eingang ($1_1$) verbindenden optischen Wellenleiterstruktur (1) aus sich vom Eingang/Ausgang ($1_0$) in Richtung Ausgänge/Eingänge ($1_1$) in Verzweigungspunkten (3) baumartig verzweigenden optischen Wellenleitern (11) und
    - je einem optischen Umschalter (4) pro Verzweigungspunkt (3) zum wahlweisen Umschalten zwischen von diesem Verzweigungspunkt (3) abzweigenden Wellenleitern (11),

    **dadurch gekennzeichnet,**

    daß zumindest einem Ausgang/Eingang ($1_1$) ein optischer Torschalter (5) zum wahlweisen optischen Freigeben und Blockieren dieses Ausgangs/Eingangs ($1_1$) in Abhängigkeit von einem Schaltzustand des Umschalters (4) eines und nur dieses Verzweigungspunktes (3), von dem ein abzweigender Wellenleiter (11) mit diesem Ausgang/Eingang ($1_1$) verbunden ist, zugeordnet ist.

**2.** Schaltmatrix nach Anspruch 1,
**dadurch gekennzeichnet,**
daß jedem Ausgang/Eingang ($1_1$) je ein Torschalter (5) zum wahlweisen Freigeben und Blockieren dieses Ausgangs/Eingangs ($1_1$) in Abhängigkeit von einem Schaltzustand des Umschalters (4) eines und nur dieses Verzweigungspunktes (3), von dem ein abzweigender Wellenleiter (11) mit diesem Ausgang/Eingang ($1_1$) verbunden ist, zugeordnet ist.

**3.** Optische N×N-Schaltmatrix in Baumstruktur mit einer Anzahl N optischer Eingänge und N optischer Ausgänge, bestehend aus

- zwei Matrix-Reihen (200) aus jeweils N optischen 1×N-Schaltmatrizen, wobei jede 1×N-Schaltmatrix je einen optischen Eingang/Ausgang ($1_0$) und je N optische Ausgänge/Eingänge ($1_1$) aufweist, und
- einem optischen Vermittlungsnetzwerk (15) mit zwei Anschluß-Reihen ($15_1$) aus jeweils N×N optischen Anschlüssen, deren jeder als optischer Ein- und/oder Ausgang dient, wobei jeder Anschluß einer Anschluß-Reihe ($15_1$) optisch mit jedem Anschluß der anderen Anschluß-Reihe ($15_1$) verbindbar ist, wobei
- die insgesamt N×N optischen Ausgänge/Eingänge ($1_1$) der N optischen 1×N-Schaltmatrizen jeder Matrix-Reihe (200) parallel mit den N×N optischen Anschlüssen je einer Anschluß-Reihe ($15_1$) verbunden sind und
- die insgesamt N optischen Eingänge/Ausgänge ($1_0$) der N optischen 1×N-Schaltmatrizen jeder Matrix-Reihe (200) die N Eingänge und/oder N Ausgänge der N×N-Schaltmatrix bilden,

**dadurch gekennzeichnet,**
daß zumindest eine optische 1×N-Schaltmatrix eine 1×N-Schaltmatrix nach Anspruch 1 oder 2 ist.

**4.** Schaltmatrix nach Anspruch 3,
**dadurch gekennzeichnet,**
daß jede optische 1×N-Schaltmatrix eine 1×N-Schaltmatrix nach Anspruch 1 oder 2 ist.

**5.** Schaltmatrix nach einem der Ansprüche 1 bis 4,
**dadurch gekennzeichnet,**
daß zumindest die Wellenleiterstruktur (1), die Umschalter (4) und die Torschalter (5) einer 1×N-Schaltmatrix auf einem gemeinsamen Substrat (100) integriert sind.

**6.** Schaltmatrix nach einem der vorhergehenden Ansprüche,
**dadurch gekennzeichnet,**
daß der Umschalter (4) eines Verzweigungspunktes (3), von dem ein abzweigender Wellenleiter (11) mit einem Ausgang/Eingang ($1_1$), dem ein Torschalter (5) zugeordnet ist, verbunden ist und dieser Torschalter (5) selbst jeweils aus einem elektrisch steuerbaren optoelektronischen Schalter mit einer Elektrodenanordnung (54) bestehen, an die elektrische Steuersignale zum Schalten dieses Schalters zwischen zumindest zwei Schaltzuständen besteht, wobei in einem dieser Schaltzustände der Torschalter (5) den Ausgang/Eingang ($1_1$), dem er zugeordnet ist, freigibt und der Umschalter (4) auf den mit diesem Ausgang/Eingang ($1_1$) verbundenen abzweigenden Wellenleiter (11) geschaltet ist und diesen freigibt, und wobei im anderen Schaltzustand der Umschalter (4) diesen abzweigenden Wellenleiter (11) und der Torschalter (5) diesen Ausgang/Eingang ($1_1$) blockieren.

**7.** Schaltmatrix nach Anspruch 6,
**dadurch gekennzeichnet,**
daß die Elektrodenanordnung (54) eines Torschalters (5) und die Elektrodenanordnung (54) eines Umschalters (4) durch eine elektrische Leitungsanordnung (7) leitend miteinander verbunden sind.

**8.** Schaltmatrix nach einem der vorhergehenden Ansprüche,
**dadurch gekennzeichnet,**
daß ein einem Ausgang/Eingang ($1_1$) zugeordneter Torschalter (5) aus einem Ein- und Ausschalter besteht, der in dem einen Verzweigungspunkt (3) mit diesem Ausgang/Eingang ($1_1$) verbindenden abzweigenden optischen Wellenleiter (11) angeordnet ist.

**9.** Schaltmatrix nach einem der vorhergehenden Ansprüche,
**dadurch gekennzeichnet,**
daß ein einem Ausgang/Eingang ($1_1$) zugeordneter Torschalter (5) aus einem Umschalter besteht, der in dem einen Verzweigungspunkt (3) mit diesem Ausgang/Eingang ($1_1$) verbindenden abzweigenden Wellenleiter (11) angeordnet ist und zum wahlweisen Umschalten zwischen diesem Wellenleiter (11) und einem in einem zusätzlichen Verzweigungspunkt (30) von diesem Wellenleiter (11) abzweigenden und zu einem optischen Sumpf (6) führenden Wellenleiter (25) dient.

**10.** Schaltmatrix nach einem der vorhergehenden Ansprüche,
**dadurch gekennzeichnet,**
daß ein Umschalter (4, 5) aus einem einen optischen Richtkoppler aufweisenden Wellenleiterschalter besteht.

**11.** Schaltmatrix nach einem der vorhergehenden Ansprüche,
**dadurch gekennzeichnet,**
daß ein Umschalter (4, 5) aus einem ein Mach-Zehnder-Interferometer aufweisenden Wellenleiterschalter besteht.

**12.** Schaltmatrix nach einem der vorhergehenden Ansprüche,
**dadurch gekennzeichnet,**
daß ein Umschalter (4, 5) aus einem eine Wellenleitergabel (40) aufweisenden Wellenleiterschalter besteht.

**13.** Schaltmatrix nach einem der vorhergehenden Ansprüche,
**dadurch gekennzeichnet,**
daß ein Umschalter (4, 5) aus einem mehr als zwei Schaltzustände aufweisenden Schalter besteht, der in einem Schaltzustand auf einen vom Verzweigungspunkt (3, 30) dieses Umschalters (4, 5) abzweigenden Wellenleiter ($1_1$) und in einem anderen Schaltzustand auf einen von diesem Verzweigungspunkt (3, 30) abzweigenden anderen Wellenleiter ($1_1$) geschaltet ist, und der in einem weiteren Schaltzustand derart geschaltet ist, daß dieser eine und andere abzweigende Wellenleiter gleichzeitig blockiert sind.

**14.** Schaltmatrix nach Anspruch 13,
**dadurch gekennzeichnet,**
daß der mehr als zwei Schaltzustände aufweisende Umschalter (4, 5) aus einem Wellenleiterschalter mit transversaler Indexkompensation besteht.

**15.** Schaltmatrix nach Anspruch 13,
**dadurch gekennzeichnet,**
daß der mehr als zwei Schaltzustände aufweisende Umschalter (4, 5) aus einem DOC-Schalter und besteht.

**Claims**

**1.** Optical 1xN switching matrix having a tree structure with an optical input/output ($1_0$) and a number N of optical outputs/inputs ($1_1$) comprising

- an optical waveguide structure (1) which connects the input/output ($1_0$) to each output/input ($1_1$) and is composed of optical waveguides (11) which branch like a tree from the input/output ($1_0$) in the direction of the outputs/inputs ($1_1$) at junction points (3), and
- in each case one optical changeover switch (4) per junction point (3) for optionally switching over between waveguides (11) which branch off from this junction point (3),

characterized
in that an optical gate switch (5) is assigned to at least one output/input ($1_1$) for optional optical release and blocking of this output/input ($1_1$) as a function of a switching state of the changeover switch (4) of one, and only this junction point (3) from which one branching waveguide (11) is connected to this output/input ($1_1$).

**2.** Switching matrix according to Claim 1,
characterized
in that in each case one gate switch (5) is assigned to each output/input ($1_1$) for optional release and blocking of this output/input ($1_1$) as a function of a switching state of the changeover switch (4) of one, and only this junction point (3) from which a branching waveguide (11) is connected to this output/input ($1_1$).

**3.** Optical NxN switching matrix having a tree structure with a number N of optical inputs and N of optical outputs, comprising

- two matrix rows (200) comprising in each case N optical 1xN switching matrices, each 1xN switching matrix having in each case one optical input/output ($1_0$) and in each case N optical outputs/inputs ($1_1$), and
- an optical switching network (15) having two connection rows ($15_1$) comprising in each case NxN optical connections, each of which is used as an optical input and/or output, it being possible to connect each connection in a connection row ($15_1$) optically to each connection in the other connection row ($15_1$),
- the total of NxN optical outputs/inputs ($1_1$) of the N optical 1xN switching matrices in each matrix row (200) being connected in parallel to the NxN optical connections of in each case one connection row ($15_1$), and
- the total of N optical inputs/outputs ($1_0$) of the N optical 1xN switching matrices of each matrix row (200) forming the N inputs and/or N outputs of the NxN switching matrix,

characterized
in that at least one optical 1xN switching matrix is a 1xN switching matrix according to Claim 1 or 2.

**4.** Switching matrix according to Claim 3,
characterized
in that each optical 1xN switching matrix is a 1xN switching matrix according to Claim 1 or 2.

**5.** Switching matrix according to one of Claims 1 to 4,
characterized
in that at least the waveguide structure (1), the changeover switch (4) and the gate switch (5) of a 1xN switching matrix are integrated on a common substrate (100).

**6.** Switching matrix according to one of the preceding claims,
characterized
in that the changeover switch (4) of a junction point (3) from which a branching waveguide (11) is connected to an output/input ($1_1$) to which a gate switch (5) is assigned, and this gate switch (5) itself, in each case comprise an electrically controllable optoelectronic switch having an electrode arrangement (54) to which electrical control signals for switching this switch between at least two switching states are applied, the gate switch (5), in one of these switching states, releasing the output/input ($1_1$) to which it is assigned, and the changeover switch (4) being switched to the branching waveguide (11) which is connected to this output/input ($1_1$) and releasing the waveguide (11), and, in the other switching state, the changeover switch (4) blocking this branching waveguide (11), and the gate switch (5) blocking this output/input ($1_1$).

**7.** Switching matrix according to Claim 6,
characterized
in that the electrode arrangement (54) of a gate switch (5) and the electrode arrangement (54) of a changeover switch (4) are conductively connected to one another by means of an electrical lead arrangement (7).

**8.** Switching matrix according to one of the preceding claims,
characterized
in that a gate switch (5) which is assigned to an output/input ($1_1$) comprises an on and off switch which is arranged in the branching optical waveguide (11) which connects a junction point (3) to this output/input ($1_1$).

**9.** Switching matrix according to one of the preceding claims,
characterized
in that a gate switch (5) which is assigned to an output/input ($1_1$) comprises a changeover switch which is arranged in the branching waveguide (11) which connects a junction point (3) to this output/input ($1_1$) and is used for optionally switching over between this waveguide (11) and a waveguide (25) which branches off from this waveguide (11) at an additional junction point (30) and leads to an optical sump (6).

**10.** Switching matrix according to one of the preceding claims,
characterized
in that a changeover switch (4, 5) comprises a waveguide switch which has an optical directional coupler.

**11.** Switching matrix according to one of the preceding claims,
characterized
in that a changeover switch (4, 5) comprises a waveguide switch which has a Mach-Zehnder interferometer.

**12.** Switching matrix according to one of the preceding claims
characterized
in that a changeover switch (4, 5) comprises a waveguide switch which has a waveguide fork (40).

**13.** Switching matrix according to one of the preceding claims,
characterized
in that a changeover switch (4, 5) comprises a switch which has more than two switching states, is switched in one switching state to a waveguide ($1_1$) which branches off from the junction point (3, 30) of this changeover switch (4, 5), is switched in another switching state to another waveguide ($1_1$) which branches off from this junction point (3, 30) and is switched in a further switching state such that this one branching waveguide and the other branching waveguide are simultaneously blocked.

**14.** Switching matrix according to Claim 13,
characterized
in that the changeover switch (4, 5) which has more than two switching states comprises a waveguide switch having transverse index compensation.

**15.** Switching matrix according to Claim 13,
characterized
in that the changeover switch (4, 5) which has more than two switching states comprises a DOC switch.

**Revendications**

**1.** Matrice de commutation optique 1xN arborescente avec une entrée/sortie optique ($1_0$) et une pluralité N de sorties/entrées ($1_1$), comprenant

- une structure (1) de guides d'ondes optiques, reliant l'entrée/sortie ($1_0$) à chaque sortie/entrée ($1_1$), composée de guides d'ondes optiques (11) qui divergent, d'une façon arborescente, à partir de l'entrée/sortie ($1_0$) vers les sorties/entrées ($1_1$), et
- un commutateur inverseur (4) pour chaque point de ramification (3) pour commuter à volonté entre les guides d'ondes (11) qui divergent de ce point de ramification (3),

**caractérisée par le fait**
qu'un circuit-porte optique (5) est affecté à au moins une sortie/entrée ($1_1$) pour ouvrir et fermer à volonté, optiquement, cette sortie/entrée ($1_1$) en fonction d'un état de commutation du commutateur inverseur (4) d'un et d'un seul point de ramification (3), à partir duquel diverge un guide d'ondes (11) qui raccorde cette sortie/entrée ($1_1$).

**2.** Matrice de commutation selon la revendication 1
**caractérisée par le fait**
qu'un circuit-porte (5) est affecté à chaque sortie/entrée ($1_1$) pour ouvrir et fermer à volonté cette sortie/entrée ($1_1$) en fonction d'un état de commutation du commutateur inverseur (4) d'un et d'un seul point de ramification (3), à partir duquel diverge un guide d'ondes (11) qui raccorde cette sortie/entrée ($1_1$).

**3.** Matrice de commutation optique NxN arborescente, avec une pluralité de N entrées optiques et N sorties optiques, comprenant

- deux rangées de matrices (200) comprenant chacune N matrices de commutation optiques 1xN, chaque matrice de commutation 1xN comportant une entrée/sortie optique ($1_0$) et N sorties/entrées optiques ($1_1$), et
- un réseau de commutation optique (15) avec deux rangées de raccordements ($15_1$) comportant chacune NxN raccordements optiques, dont chacun d'eux sert d'entrée et/ou de sortie optiques, chaque raccordement d'une rangée de raccordements ($15_1$) pouvant être connecté optiquement à chaque raccordement de l'autre rangée de raccordements ($15_1$),
- les, au total, NxN sorties/entrées optiques ($1_1$) des N matrices de commutation optiques 1xN de chaque rangée de matrices (200) étant raccordées en parallèle aux NxN raccordements optiques de chaque rangée de raccordements ($15_1$), et
- les, au total, N entrées/sorties optiques ($1_0$) des N matrices de commutation optiques 1xN de chaque rangée de matrices (200) formant les N entrées et/ou N sorties de la matrice de commutation NxN

**caractérisée par le fait**

que, au moins, une matrice de commutation optique 1xN est une matrice de commutation 1xN selon la revendication 1 ou 2.

**4.** Matrice de commutation selon la revendication 3
**caractérisée par le fait**
que chaque matrice de commutation optique 1xN est une matrice de commutation 1xN selon la revendication 1 ou 2.

**5.** Matrice de commutation selon l'une des revendication 1 à 4
**caractérisée par le fait**
que, au moins, la structure de guides d'ondes (1), les commutateurs inverseurs (4) et les circuits-portes (5) d'une matrice de commutation 1xN sont intégrés sur un substrat commun (100).

**6.** Matrice de commutation selon l'une des revendications précédentes
**caractérisé par le fait**
que le commutateur inverseur (4) d'un point de ramification (3), par lequel un guide d'ondes divergent (11) est relié à une sortie/entrée ($1_1$), à laquelle un circuit-porte (5) est affecté, et ce circuit-porte (5) lui-même sont constitués chacun par un commutateur optoélectronique réglable électriquement avec un dispositif d'électrodes (54), auquel parviennent des signaux électriques de commande pour commuter ce commutateur entre au moins deux états de commutation, le circuit-porte (5) ouvrant, dans un de ces états de commutation, la sortie/entrée ($1_1$), à laquelle il est affecté, le commutateur inverseur (4) étant commuté sur le guide d'ondes divergent (11) relié à cette sortie/entrée ($1_1$) et ouvrant cette dernière et le commutateur inverseur (4) fermant, dans l'autre état de commutation, ce guide d'ondes divergent (11) et le circuit-porte (5) fermant cette sortie/entrée ($1_1$).

**7.** Matrice de commutation selon la revendication 6
**caractérisée par le fait**
que le dispositif d'électrodes (54) d'un circuit-porte (5) et le dispositif d'électrodes (54) d'un commutateur inverseur (4) sont reliés électriquement l'un à l'autre par un dispositif de conducteurs électriques (7).

**8.** Matrice de commutation selon l'une des revendications précédentes
**caractérisée par le fait**
qu'un circuit-porte (5) affecté à une sortie/entrée ($1_1$) est constitué par un commutateur et un interrupteur, qui est placé sur un guide d'ondes optique divergent (11), qui relie un point de ramification (3) à cette sortie/entrée ($1_1$).

**9.** Matrice de commutation selon l'une des revendications précédentes
**caractérisée par le fait**
qu'un circuit-porte (5) affecté à une sortie/entrée ($1_1$) est constitué par un commutateur inverseur, qui est placé sur un guide d'ondes optique divergent (11), qui relie un point de ramification (3) à cette sortie/entrée ($1_1$), et qui sert à commuter à volonté entre ce guide d'ondes (11) et un guide d'ondes (25), lequel diverge de ce guide d'ondes (11) en un point de ramification supplémentaire (30) et lequel conduit à un puits optique (6).

**10.** Matrice de commutation selon l'une des revendications précédentes
**caractérisée par le fait**
qu'un commutateur inverseur (4, 5) est constitué par un commutateur de guide d'ondes comportant un coupleur optique directif.

**11.** Matrice de commutation selon l'une des revendications précédentes
**caractérisée par le fait**
qu'un commutateur inverseur (4, 5) est constitué par un commutateur de guide d'ondes comportant un interféromètre de Mach-Zehnder.

**12.** Matrice de commutation selon l'une des revendications précédentes
**caractérisée par le fait**
qu'un commutateur inverseur (4, 5) est constitué par un commutateur de guide d'ondes comportant un circuit termineur de guide d'ondes en Y (40).

**13.** Matrice de commutation selon l'une des revendications précédentes

**caractérisée par le fait**
qu'un commutateur inverseur (4, 5) est constitué par un commutateur, comportant plus de deux états de commutation, qui, dans un état de commutation, commute sur un guide d'ondes (11), qui diverge à partir du point de ramification (3, 30) de ce commutateur inverseur (4, 5), et, dans un autre état de commutation, commute sur un autre guide d'ondes (11), qui diverge à partir de ce point de ramification (3, 30), et qui, dans encore un autre état de commutation, est commuté de telle sorte que ce premier et cet autre guide d'ondes divergents sont fermés simultanément.

**14.** Matrice de commutation selon la revendication 13
**caractérisée par le fait**
que le commutateur inverseur (4, 5) comportant plus de deux états de commutation est constitué par un commutateur de guides d'ondes à compensation indexée transversale.

**15.** Matrice de commutation selon la revendication 13
**caractérisée par le fait**
que le commutateur inverseur (4, 5) comportant plus de deux états de commutation est constitué par un commutateur DOC.

FIG 1

FIG 2a

FIG 2b

FIG 2c

FIG 2d

FIG 2e

FIG 2f

## FIG 3

FIG 4